# EUROPÄISCHE PATENTSCHRIFT

(11) **EP 1 229 620 B1**
(45) Veröffentlichungstag und Bekanntmachung des Hinweises auf die Patenterteilung: **04.07.2007**
(21) Anmeldenummer: 02090039.5
(22) Anmeldetag: 28.01.2002
(51) Int. Cl.: H02B 1/30

(54) **Verfahren zum Zusammenbau eines Elektroschranks und Elektroschrank**
Method of assembling an electrical cabinet and electrical cabinet
Procédé d'assemblage d'une armoire électrique et armoire électrique

(30) Priorität: 31.01.2001 DE 10104214
(43) Veröffentlichungstag der Anmeldung: 07.08.2002
(73) Patentinhaber: SIEMENS AKTIENGESELLSCHAFT, 80333 München (DE)
(72) Erfinder: Wilhelm, Horst, 93073 Neutraubling (DE)

(56) Entgegenhaltungen:
- DE-U- 29 517 924

## Beschreibung

Die Erfindung betrifft einen Elektroschrank sowie ein Verfahren zum Zusammenbauen eines Elektroschrankes.

Der Begriff Elektroschrank umfasst im folgenden Schaltschränke, Verteilerschränke sowie Schaltkästen und Verteilerkästen, in denen elektrischen Geräten installiert sind. Die Elektroschränke können freistehend oder in Wände eingebaut sein.

Üblicherweise werden die Elektroschränke erst vor Ort aufgestellt und mit den Geräten bestückt. Dabei werden die Einzelteile der Elektroschränke miteinander vernietet oder verschraubt. Zum Zusammenbau sind einerseits spezielle, auf den Elektroschrank abgestimmte Befestigungsmittel, wie Schrauben oder Nieten, und andererseits, wie Bohrer oder Schrauber, notwendig.

Aus der DE 295 17 924 U1 ist ein Schaltschrank bekannt, bei dem Eckverbinder in U-förmiger Abkantungen eines Wandteils eingebettet und mit dem Wandteil verschraubt sind. An den sich vom Wandteil senkrecht wegerstreckenden Abschnitt des Eckverbinders ist eine Strebe angeschraubt.

Aus der US 5,944,439 ist eine Eckenstrebe für Metallregale beschrieben.

Schließlich ist aus der FR 2 702 314 ein Metallschrank bekannt, der in den Ecken Holme aufweist.

Gerade bei Elektroschränken, die in Entwicklungsländer oder in Länder der Dritten Welt verschickt und dort aufgebaut werden, ist dies jedoch nachteilig, da in diesen Ländern meist nicht ausreichend ausgebildetes Personal oder ausreichend Werkzeug zur Verfügung steht, um komplexe Arbeiten durchzuführen.

Der vorliegenden Erfindung liegt daher die Aufgabe zugrunde, die bekannten Elektroschränke dahingehend zu verbessern, dass sie leichter zusammenzubauen sind, nach Möglichkeit ohne oder mit nur möglichst wenigen Befestigungsmitteln.

Diese Aufgabe wird erfindungsgemäß dadurch gelöst, dass der Elektroschrank mit einer Rückwand und mit wenigstens einer mit der Rückwand klemmend in Eingriff gebrachten Eckenstrebe und mit wenigstens einem Seitenteil versehen ist, das mit der Rückwand und der Eckenstrebe klemmend in Eingriff gebracht ist.

Der erfindungsgemäße Aufbau des Schaltschrankes ist einfach und hat zum einen den Vorteil, dass durch die Verklemmung der einzelnen Teile keine zusätzlichen Befestigungsmittel beim Zusammenbau des Schaltschrankes notwendig sind.

Im Gegensatz zu der aus der DE 295 17 924 U1 bekannten Lösung wird erfindungsgemäß ein stabiler und einfach herzustellender Zusammenhalt des Schrankes dadurch erreicht, dass der Eckverbinder mit der Rückwand klemmend in Eingriff gebracht wird und ein Seitenteil sowohl mit der Rückwand als auch mit der Eckenstrebe klemmend in Eingriff gebracht ist. Somit dient die Eckenstrebe als zentrales Befestigungselement.

Ein weiterer Vorteil des Schaltschrankes liegt darin, dass es aufgrund seiner Unterteilung in Rückwand, Seitenteil und Eckenstrebe im auseinander gebauten Zustand ein geringes und flaches Verpackungsmaß aufweist und so kostengünstig in die verschiedensten Länder zu transportieren ist. Dies ist insbesondere dann möglich, wenn die Teile, aus denen der Schrank aufgebaut ist, im wesentlichen flächig ausgestaltet sind.

In einer vorteilhaften Ausgestaltung bildet die Rückwand an wenigstens einer Längskante einen Kantenfalz aus, der mit einem entsprechenden Klemmabschnitt der Eckenstrebe verklemmt ist. Ein Kantenfalz ist an der Rückwand durch Umfalzen einer Kante oder von Teilen einer Kante kostengünstig herzustellen und bietet eine konstruktiv einfache Möglichkeit der Verklemmung.

In einer Weiterbildung dieses Prinzips können auch in einem Eckenbereich der Rückwand zwei Kantenfalze vorgesehen sein, die im wesentlichen parallel zu Längskanten der Rückwand verlaufen und die wenigstens zwei entsprechenden Klemmabschnitten der Eckenstrebe zugeordnet sind. Durch die bei dieser Ausgestaltung im Winkel aufeinandertreffenden Kantenfalze ist eine Abstützung und Lagebestimmung der Klemmabschnitte in zwei Richtungen möglich, so dass sich der Halt der Eckenstrebe an der Rückwand verbessert und die Eckenstrebe ist stärker belastbar.

Der Kantenfalz kann in einer weiteren Ausgestaltung im Eckenbereich der Rückwand unterbrochen sein und eine Eckenaussparung ausbilden, in welche die Eckstrebe eingesetzt ist. Diese Ausgestaltung ermöglicht eine bündige Ausrichtung der Eckenstrebe mit der Rückwand.

Die Klemmverbindung zwischen der Rückwand und der Eckenstrebe kann in einer vorteilhaften Weiterbildung dadurch erfolgen, dass der Kantenfalz und der zugeordnete Klemmabschnitt ineinander geschoben sind. Auf konstruktiv einfache Weise ist dies in einer Weiterbildung möglich, indem Kantenfalz und Klemmabschnitt als U-Profile ausgebildet sind, die ineinander geschoben sind. Bei einem U-Profil kann die Klemmwirkung auf einfache Weise durch die Federwirkung eines oder beider Schenkel erreicht werden.

Um zu vermeiden, dass die Seitenteile des Elektroschrankes an den Seitenkanten auseinander klaffen, kann die Eckenstrebe in einer vorteilhaften Ausgestaltung in einem Querschnitt im wesentlichen parallel zur Ebene der Rückwand zwei im wesentlichen senkrecht aufeinander stehende Schenkel aufweisen, welche die äußeren Seitenkantenabschnitte des Elektroschrankes bilden.

Die Stabilität der Eckenstrebe kann durch Versteifungsrippen erhöht werden, die vorzugsweise an der dem Innenraum des Elektroschranks zugewandten Seite der Eckenstrebe zwischen den Schenkeln angeordnet ist.

Zur Positionierung der Seitenteile kann an der Eckenstrebe an dem von der Rückwand abgewandten, vorderen Ende wenigstens eine Anschlagfläche ausgebildet sein, an der ein vorderer Bereich des Seitenteils anliegt. Durch die Anschlagfläche lässt sich eine Beschädigung des Elektroschrankes beim Zusammenbau vermeiden, da das Seitenteil nur begrenzt verschoben werden kann.

Um die Fertigungskosten der Eckenstrebe und des Seitenteils niedrig zu halten, können der vordere Bereich des Seitenteils und/oder die Anschlagflächen als Falze ausgebildet sein.

Zweckmäßigerweise kann die Anschlagfläche gleichzeitig der Sicherung des vorderen Bereichs des Seitenteils an der Eckenstrebe dienen. Dies kann dadurch erfolgen, dass der vordere Bereich des Seitenteils den vorderen Bereich der Eckenstrebe zumindest abschnittsweise umgreift.

Zur Befestigung des hinteren, der Rückwand des Elektroschranks zugewandten Bereichs des Seitenteils kann ebenfalls ein Falz am Seitenteil vorgesehen sein. Dieser Falz kann mit dem Kantenfalz in Eingriff stehen, der dem jeweiligen Kantenfalz zugeordnet ist. Durch den Eingriff der Falze lässt sich ohne Verwendung zusätzlicher Befestigungsmittel und ohne Spezialwerkzeug auf einfache Weise eine montagefeste Verbindung des Seitenteils mit der Rückwand und der an der Rückwand befestigten Eckenstrebe erreichen.

Insbesondere wenn sich der Kantenfalz, der hintere Falz und der Klemmabschnitt der Eckenstrebe gegenseitig überlappen, vorzugsweise als ineinander verschachtelte und ineinander geschobene U-Profile, ist eine gute und einfach zu erzeugende Verbindung möglich.

Das klemmende Ineinandergreifen der verschiedenen Elemente des Schaltschranks lässt sich insbesondere durch eine Verrastung erreichen.

Dabei kann an der Eckenstrebe zumindest ein Rastmittel ausgebildet sein, das mit einem entsprechend ausgestaltetem Gegenrastmittel der Rückwand verrastet ist. Als Rastmittel und Gegenrastmittel können Kombinationen von Vorsprüngen und Aussparungen oder Öffnungen oder andere ineinander rastende, formschlüssige Rastelemente und entsprechend ausgestaltete Gegenrastmittel verwendet werden. Zweckmäßigerweise sind Rastmittel und Gegenrastmittel so ausgebildet, dass sie selbsttätig ineinander verrasten, sobald die Einbaulage der miteinander zu verbindenden Teile erreicht ist.

Beim erfindungsgemäßen Elektroschrank sind in einer weiteren vorteilhaften Ausgestaltung auch die weiteren Bestandteile des Elektroschranks im wesentlichen ohne zusätzliche Befestigungsmittel befestigt. So kann die Eckenstrebe einen Lagerabschnitt aufweisen, der zur Aufnahme eines entsprechenden Gegenlagerabschnittes eines schwenkbaren Türelements dient. Durch diese Ausgestaltung ist es nicht mehr notwendig, Scharniere an den Türen oder am Hauptkörper des Elektroschrankes anzubringen.

Eine optisch gelungene Gestaltung wird dann erreicht, wenn die Eckenstreben zusammen mit den Seitenteilen eine dem Türelement zugewandte, im wesentlichen rahmenförmige Türanschlagsfläche ausbilden, an der das Türelement im geschlossenen Zustand anliegt. An diesem Rahmen ist anstelle eines Türelements auch eine Zarge des Türelements anbringbar.

Schließlich kann der Elektroschrank auch ein mit Elektrogeräten bestücktes Traggerüst aufweisen, das mit Rastmitteln versehen ist, die in entsprechend ausgestaltete Gegenrastmittel des Elektroschranks eingreifen und durch die das Traggerüst im Elektroschrank gehalten ist. Mit dieser Ausgestaltung ist eine Befestigung des Traggerüsts im Elektroschrank möglich, ohne dass zusätzliche Befestigungsmittel benötigt werden.

Um das fertig bestückte Traggerüst in den Elektroschrank einsetzen zu können und die einzelnen Geräte nicht in der Enge des Schaltschrankes montieren zu müssen, ist in einer Weiterbildung der Erfindung vorzugsweise die Öffnung des Schaltschranks so bemessen, dass das Traggerüst in diese Öffnung im bestückten Zustand einsetzbar ist.

Die Erfindung betrifft auch einen Bausatz, der wenigstens ein Seitenteil, wenigstens ein Eckenstrebe und wenigstens eine Rückwand umfasst, und aus dem ein Elektroschrank in einer der vorgenannten Ausgestaltungen herstellbar ist.

Die Erfindung betrifft auch ein Verfahren zum Zusammenbau des Elektroschrankes gemäß Anspruch 24.

Im folgenden werden das erfindungsgemäße Verfahren und die erfindungsgemäße Eckenstrebe mit Bezug auf die Zeichnungen anhand eines Ausführungsbeispiels genauer erläutert:

Es zeigen:
- Fig. 1: eine perspektivische Ansicht einer Eckenstrebe;
- Fig. 2: eine perspektivische Ansicht einer an der Rückwand angebrachten Eckenstrebe;
- Fig. 3: eine perspektivische Ansicht einer Ecke eines Elektroschrankes mit zwei Seitenteilen, der Rückwand und der Eckenstrebe im zusammengebauten Zustand;
- Fig. 4: eine perspektivische Ansicht der Verbindung zwischen einem Seitenteil und der Rückwand bei zur Erläuterung entfernter Eckenstrebe;
- Fig. 5: eine perspektivische Ansicht des Elektroschrankes vor Einsetzen des letzten Seitenteils;
- Fig. 6: eine Explosionsansicht eines Elektroschrankes in einer Ausgestaltung als Verteilerkasten zum Wandeinbau.

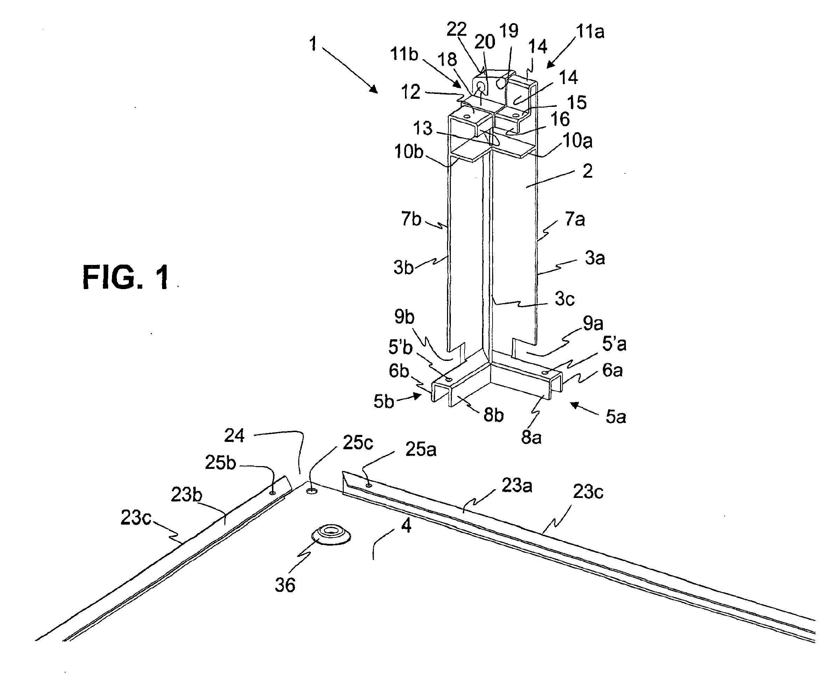

Zunächst wird der Aufbau einer erfindungsgemäßen Eckenstrebe 1 anhand der Fig. 1 beschrieben.

Die Eckenstrebe 1 weist einen Hauptkörper 2 mit einem im wesentlichen symmetrischen, L-förmigen Querschnitt auf, der durch zwei im wesentlichen senkrecht aufeinander stehende Schenkel 3a und 3b gebildet wird. In Richtung der Winkelhalbierenden des rechten Winkels des Querschnittes und in Längsrichtung der Eckenstrebe 1 verläuft eine Versteifungsrippe 3c. Die Seite der Versteifungsrippe 3c wird im folgenden als die innere Seite bezeichnet.

An dem einen, der Rückwand 4 eines in Fig. 1 nicht dargestellten Elektroschrankes zugewandten Ende - im folgenden als hinteres Ende bezeichnet - des Hauptkörpers 2 sind zwei Klemmabschnitte 5a und 5b angeordnet. Die Klemmabschnitte 5a und 5b weisen einen im wesentlichen U-förmigen Querschnitt auf, dessen offene Seite in Richtung weg vom Hauptkörper 2 nach hinten gerichtet sind. Die beiden Klemmabschnitte 5a und 5b stehen im wesentlichen senkrecht aufeinander, ihre nach außen weisenden Wandabschnitte 6a, 6b sind miteinander verbunden und gegenüber Außenflächen 7a, 7b des Hauptkörpers 2 nach innen versetzt. Die inneren Wandabschnitte 8a, 8b der Klemmabschnitte 5a, 5b sind ebenfalls miteinander verbunden; an der Verbindungslinie der beiden Klemmabschnitte 5a und 5b trifft die Versteifungsrippe 3c auf die Klemmabschnitte.

An den beiden nach vorne gerichteten Flächen der Klemmabschnitte 5a, 5b sind jeweils nahe deren Enden jeweils zwei Rastmittel 5'a und 5'b vorgesehen. Ein weiterer, in der Darstellung der Fig. 1 nicht zu erkennendes Rastmittel 5'c ist im Verbindungsbereich der beiden Klemmabschnitte 5a und 5b angeordnet.

Im Ausführungsbeispiel der Fig. 1 sind die Klemmabschnitte 5'a, 5'b und 5'c als knopfförmige Erhebungen ausgestaltet.

Die beiden Klemmabschnitte 5a und 5b erstrecken sich jeweils in die Richtung der Schenkel des L-förmigen Hauptkörpers und sind etwas länger als die Schenkel 3a und 3b. Im Übergang zwischen den Klemmabschnitten 5a und ist sind an den beiden Schenkeln 3a und 3b jeweils eine im wesentlichen rechteckige Aussparung 9a und 9b vorgesehen.

In der Nähe des anderen, vorderen Endes der Eckenstrebe 1 sind innen an den Schenkeln 3a und 3b zwei als Rippen ausgebildete Anschläge 10a und 10b vorgesehen. Jeder Anschlag 10a, 10b springt vom entsprechenden Schenkel 3a, 3b senkrecht nach innen vor. Die Anschläge erstrecken sich jeweils quer zur Längserstreckung des Hauptkörpers 2 und erstrecken sich über die gesamte Breite des zugehörigen Schenkels.

Am vorderen Ende des Hauptkörpers enden die Schenkel 3a und 3b in Endfalzen 11a und 11b.

Der Endfalz 11b ist zwei mal im rechten Winkel nach innen gebogen und bildet zwei nach innen gerichtete Anschlagflächen 12 und 13 aus. Die Breite des Endfalzes 11b ist etwas geringer als die Breite des zugehörigen Schenkels 3a.

Der Endfalz 11a erstreckt sich ebenfalls nicht über die gesamte Breite des Schenkels 3b. Der Endfalz 11a ist im Querschnitt zweifach treppenförmig in Richtung nach innen und hinten umgebogen und bildet vier Anschlagflächen 14, 15, 16 und 17 aus.

Im Stirnbereich der Eckenstrebe 1 zwischen den beiden Endfalzen 11a und 11b ist eine Türhalterung 18 ausgebildet. Die Türhalterung 18 weist eine nach vorne gerichtete Türanschlagfläche 19 und eine Türrahmenfläche 20 auf, die sich senkrecht zur Türanschlagfläche und parallel zu dem einen Schenkel 3b nach vorne erstreckt und einen Lagerabschnitt 21 aufweist.

Die Eckenstrebe 1 wird vorne von einer Stirnfläche 22 abgeschlossen.

Die Türhalterung 18 und die Stirnfläche 22 sind von den Endfalzen 11a und 11b unter Ausbildung einer Stufe nach vorne abgesetzt.

Die Rückwand 4 weist, wie in Fig. 1 zu erkennen ist, Kantenfalze 23 an jeder Kante auf. In dem gemäß Fig. 1 linken oberen Eck treffen zwei Kantenfalze 23a und 23b aufeinander. Die Kantenfalze sind im Querschnitt zweifach in einem im wesentlichen rechten Winkel umgebogen und bilden so mit der Fläche der Rückwand 4 einen U-förmigen Querschnitt aus, der sich zum Mittelpunkt der Fläche der Rückwand hin öffnet. Insbesondere der zur Ebene der Rückwand 4 in etwa parallele Schenkel kann bezüglich des anderen Schenkels um weniger als im rechten Winkel abgeknickt sein und auf die Rückwand 4 zu verlaufen.

Im Bereich einer Ecke sind die Kantenfalze 23 jeweils unterbrochen und geben eine Eckenaussparung 24 frei. Dabei sind die in etwa zur Ebene der Rückwand 4 parallelen Falzabschnitte im Bereich der Eckenaussparung zur Mitte der jeweiligen Seite der Rückwand, weg von der Ecke abgeschrägt.

Ferner sind im Bereich der Ecke an der Rückwand 4 Gegenrastmittel 25a, 25b und 25c angeordnet. Die Gegenrastmittel 25a und 25b sind an den Kantenfalzen 23a und 23b in der Nähe des Eckenbereichs ausgebildet. Das Gegenrastmittel 25c ist im Bereich der Aussparung 24 in der Rückwand 4 ausgebildet und liegt in etwa auf der Winkelhalbierenden der betreffenden Ecke.

Im Ausführungsbeispiel der Fig. 1 sind die Gegenrastmittel 25a, 25b und 25c als runde Öffnungen ausgebildet.

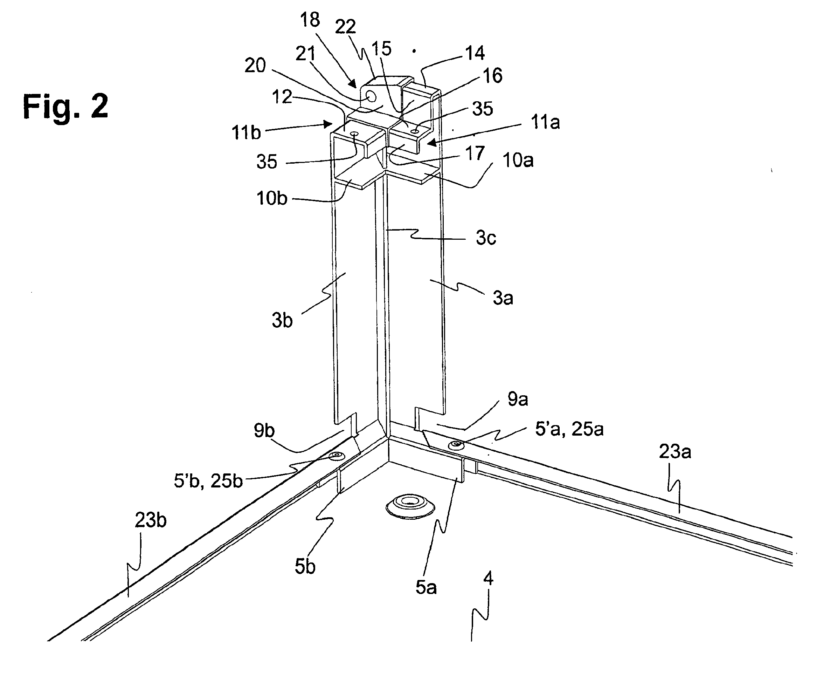

Als nächstes wird die Anordnung der Fig. 2 beschrieben, bei der die Eckenstrebe 1 an der Rückwand 4 befestigt ist, ohne dass zusätzliche Befestigungsmittel oder zusätzliches Werkzeug benötigt werden.

Zur Befestigung der Eckenstrebe 1 an der Rückwand 4 werden die offenen Enden der Klemmabschnitte 5a und 5b auf die Rückwandfläche gesetzt und mit der Außenseite der Eckenstrebe voran in Richtung der Ecke geschoben, in der die Eckenstrebe montiert werden soll.

In der Einbaulage der Eckenstrebe, wie sie in der Fig. 2 dargestellt ist, ist dann der jeweilige Klemmabschnitt 5a und 5b unter den jeweiligen Kantenfalz 23a und 23b geschoben. Durch die Abschrägung des in etwa zur Rückwandebene parallelen Falzabschnittes und durch ein geringes Untermaß der lichten Höhe der Kantenfalze 23a und 23b relativ zu den Klemmabschnitten 5a und 5b ist die Eckstrebe bereits in einem Klemmsitz durch elastisches Auslenken des U-Profils zumindest montagefest gehalten. Aufgrund des Klemmsitzes kann sich die Eckenstrebe 1 bei den Belastungen, wie sie beim Zusammenbau eines Schaltschrankes zu erwarten sind, nicht von der Rückwand lösen.

Anstelle einer Kombination eines Rastmittels und eines Klemmsitzes kann die Eckenstrebe auch jeweils nur durch das Rastmittel oder nur durch den Klemmsitz gehalten sein. Beide Befestigungsmethoden stellen im Sinne der Beschreibung ein Festklemmen dar.

Die Festigkeit der Verbindung zwischen der Eckenstrebe 1 und der Rückwand 4 wird dadurch verstärkt, dass in der Einbaulage die Rastabschnitte 5'a und 5'b auf den Klemmabschnitten 5a und 5b mit den Gegenrastabschnitten 25a und 25b verrastet sind. Im Ausführungsbeispiel der Fig.1 wird dies dadurch erreicht, dass die eckenstrebenseitigen Vorsprünge in die rückwandseitigen Öffnungen einrasten. Ebenso ist der Rastabschnitt 5'c der Eckenstrebe 1 mit dem Gegenrastabschnitt 25c verrastet.

Die Breite der Eckenaussparung 24 entspricht mindestens der Breite des Hauptkörpers 2 im Bereich der Aussparungen 9a und 9b. Die Außenflächen der Schenkel 3a und 3b im Bereich der Aussparungen 9a und 9b bilden in der Einbaulage die Fortsetzung der Außenflächen 23c Falzabschnitte der Kantenfalze 23a und 23b.

Zum Zusammenbau der Schaltschrankes wird in jede der Ecken der Rückwand 4 eine Eckenstrebe 1 gemäß Fig. 2 eingesetzt.

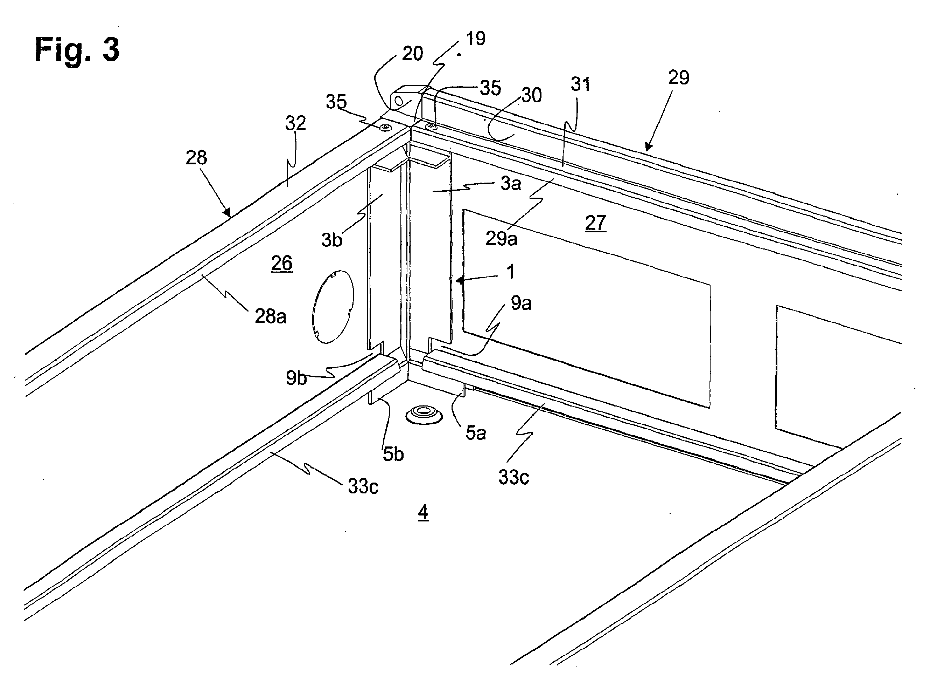

Anschließend werden die Seitenteile befestigt, wie dies in der Fig. 3 dargestellt ist.

In der Fig. 3 sind die Eckenstrebe 1, ein Seitenteil 26 und ein weiteres Seitenteil 27, im vorliegenden Fall ein Deckelteil, in ihrer jeweiligen Einbaulage gezeigt. Die Eckenstrebe 1 befindet sich dabei relativ zur Rückwand 4 in der in Fig. 2 gezeigten Einbaulage.

Die vorderen Längskanten 28, 29 des Seitenteils 26 und des Deckelteils 27 bilden jeweils Falze aus.

Die Längskante 28 des Seitenteils 26 bildet, ähnlich den Kantenfalzen 23 der Rückwand 4 einen einfachen Falz. Die Längskante 29 des Deckelteils 27 bildet einen doppelten Falz aus, der eine nach unten gerichtete Türrahmenfläche 30 und eine nach vorne gerichtete Türanschlagfläche 31 aufweist.

In der Einbaulage gemäß Fig. 3 setzen sich die Türrahmenfläche 30 und die Türanschlagfläche 31 des Deckelteils 27 in der Türrahmenfläche 20 und der Türanschlagfläche 19 der Eckenstrebe 1 fort.

Der Falz des Seitenteils 26 bildet eine Türanschlagfläche 32, die sich ebenfalls in der Türanschlagfläche 19 der Eckenstrebe fortsetzt.

In der Einbaulage der Fig. 3 liegen die Innenseiten des Falzes 28 auf den Anschlagflächen 12 und 13 der Eckenstrebe 1 und die Innenseiten des Falzes 29 auf den Anschlagflächen 14, 15, 16 und 17 der Eckenstrebe 1 auf. Durch das Hintergreifen der Anschlagflächen 12 bis 17 durch den jeweils letzten Falzabschnitt 28a, 29a sind die Seitenteile 26, 27 gegen ein Abnehmen in Richtung jeweils senkrecht zu ihren Seitenebenen gesichert.

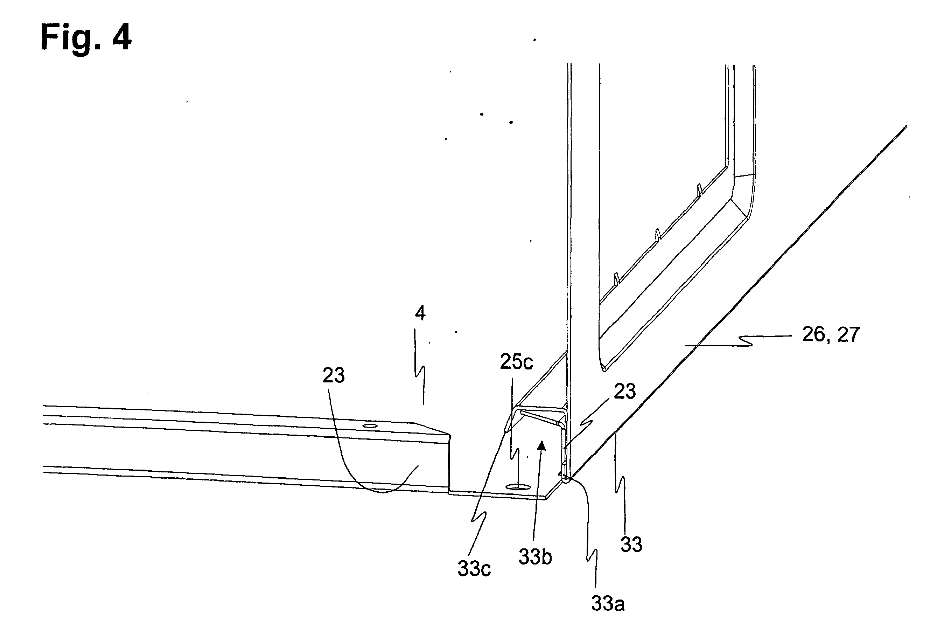

Der Aufbau der Seitenteile 26 und 27 an der hinteren Längskante ist im wesentlichen gleich und wird im folgenden kurz mit Bezug auf die Fig. 4 beschrieben, in der die Einbaulage der Fig. 3 vergrößert dargestellt und zur Erläuterung die Eckenstrebe 1 weggelassen ist.

An der rückwärtigen Längskante 33 sind die Seitenteile 26 und 27 zunächst um 180° nach innen umgefalzt, so dass der Falz in einem ersten Abschnitt 33a direkt am jeweiligen Seitenteil anliegt. In einem Abstand von der hinteren Längskante des Seitenteils, der in etwa der Höhe eines Kantenfalzes 23 der Rückwand 4 entspricht, ist der Falz dann vom jeweiligen Seitenteil 26, 27 im wesentlichen rechtwinklig weggebogen und dann nochmals nach hinten in etwa im rechten Winkel abgeknickt, so dass ein nach hinten offenes U-Profil 33b ausgebildet ist. Die lichte Weite des U-Profils ist etwas geringer als die Breite des Kantenfalzes 23 der Rückwand 4 bzw. der Breite eines Klemmabschnittes 5a, 5b der Eckenstrebe 1. In diesem U-Profil ist in der Einbaulage gemäß der Fig. 3 der jeweilige Klemmabschnitt 5a, 5b aufgenommen, so dass sich in diesem Bereich Eckenstrebe, Rückwand und Seitenteil überlappen und miteinander verklemmen. Auf diese Weise wird ein Reibschluss zwischen diesen Elementen erhalten.

Wie der Fig. 3 zu entnehmen ist, wird jedes Seitenteil 26, 27 zunächst senkrecht zu seiner Ebene so angeordnet, dass die Falze 28, 29 an den Vorderkanten mit den zugeordneten Anschlagfläche der Eckenstrebe 1, und das U-Profil 33b mit dem zugeordneten Kantenfalz 23 und dem zugeordneten Klemmabschnitt 5a, 5b der Eckenstrebe 1 fluchten.

Um das Seitenteil in die entsprechende Lage zu bringen, sind die Aussparungen 9a du 9b vorgesehen, deren lichte Weite in Längsrichtung des Hauptkörpers 2 mindestens der Breite des Schenkels 33c des U-Profils 33b des Seitenteils entspricht. Dann wird das Seitenteil in Richtung auf die Rückwand geschoben, bis die Innenseiten der vorderen Falze 28, 29 an den zugeordneten Anschlagflächen 14 bis 17 der Eckenstrebe anliegen und damit die Einbaulage erreicht ist.

Dieser Vorgang wird für jedes Seitenteil wiederholt.

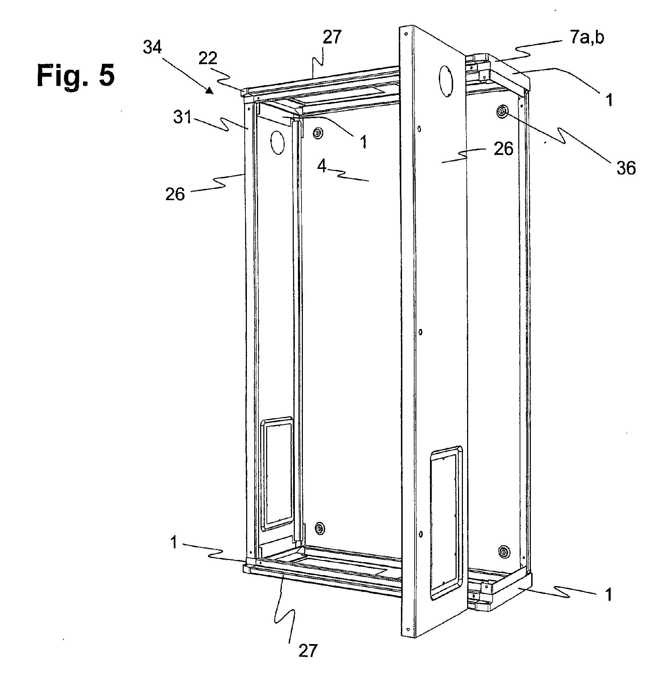

In Fig. 5 ist ein nahezu fertiger Elektroschrank 34 dargestellt, bevor das letzte Seitenteil eingesetzt wird. Wie dieser Figur zu entnehmen ist, überdecken die Seitenteile nicht die gesamten Außenflächen der Schenkel 3a, 3b der Eckenstrebe 1. Folglich bilden die Schenkel 3a und 3b jeweils die von vorne nach hinten verlaufenden Außenkanten des Elektroschrankes. Um einen glatten Übergang zwischen den Seitenteilen 26, 27 und den außenliegenden Flächen der Schenkel 3a und 3b und damit ein gefälligeres Aussehen zu erreichen, können die Außenflächen 3a und 3b einen nach außen vorspringenden Absatz aufweisen, dessen Höhe in etwa der Materialstärke eines Seitenteils entspricht.

Wie in Fig. 5 zu erkennen ist, sind die Seitenteile und die Rückwand im wesentlichen flächige Elemente mit geringer Höhe. Die Eckenstreben weisen ebenfalls eine geringe Höhe auf. Daher lässt sich der Elektroschrank als Bausatz in einer flachen Verpackung verschicken.

Nachdem das letzte Seitenteil befestigt ist, können Verbindungselemente an den Stellen 35 der Fig. 3 angebracht werden, die jeweils ein Seitenteil mit der Eckenstrebe verbinden und ein Abziehen des Seitenteils von der Eckenstrebe in Richtung weg von der Rückwand verhindern.

Ebenso kann zur Sicherung im Bereich des als Öffnung ausgebildeten Gegenrastmittels 25c die Eckenstrebe mit einem Verbindungsmittel an der Rückwand 4 gesichert werden.

Als Verbindungsmittel können dabei Niete oder Schrauben oder aber Clips verwendet werden.

Nachdem alle Seitenteile befestigt sind, wird plattenförmiges Isoliermaterial zur elektrischen Isolierung an den Innflächen des Elektroschrankes 34 angebracht. Zur Befestigung der Isoliermaterial-Platten an den Innenflächen werden ebenfalls Clips (nicht gezeigt) verwendet, die in Öffnungen 36 einrasten, wie sie beispielshalber in Fig. 3 dargestellt sind. Die Anschläge 10a, 10b dienen dabei neben ihrer Funktion als Versteifungsrippen zur Versteifung der Eckenstrebe 1 gegen Torsion auch als Anschläge, mit denen die Isolierplatten im Elektroschrank 34 ausgerichtet werden.

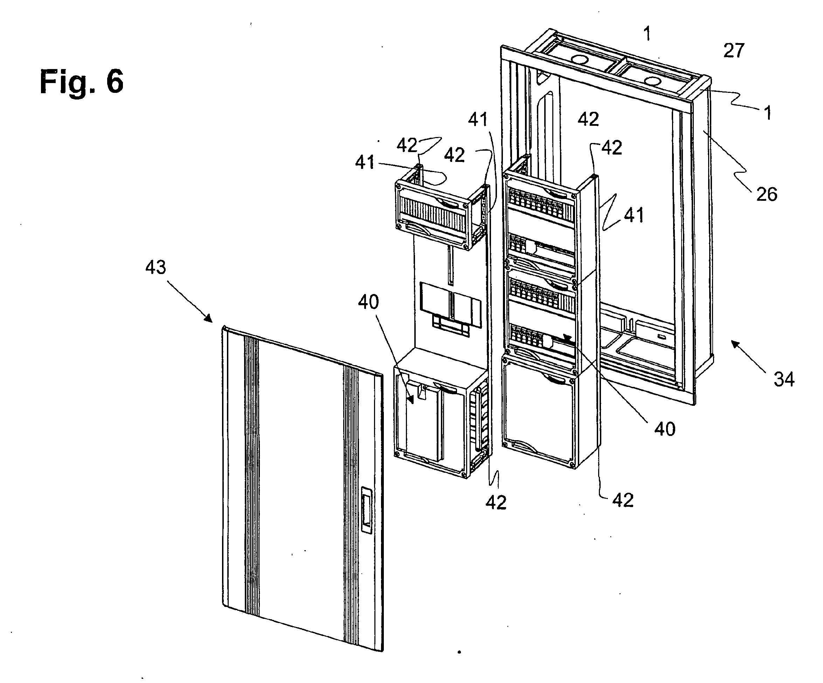

Wie in Fig. 6 gezeigt ist, werden anschließend die elektrischen Geräte 40 an einem Traggerüst 41 außerhalb des fertig zusammengesetzten Schaltschrankgehäuses 34 vormontiert und dann das Traggerüst 41 zusammen mit den Geräten 40 in den Schaltschrank 34 ohne Verwendung weiterer Befestigungsmaterialien und Werkzeugs in den fertigen Schaltschrank geclipst. Hierzu sind am Traggerüst 41 oben und unten beim Einsetzen in den Schaltschrank selbsttätig einrastende Rastmittel 42 vorgesehen, die mit Gegenrastmitteln (nicht gezeigt) im Schaltschrankinneren verrasten.

Vor oder nach dem Einsetzen der Elektrogeräte mit dem Traggerüst wird in die einander gegenüberliegenden Lagerabschnitte 21 zweier Eckenstreben 1 ebenfalls ohne weiteres Werkzeug ein Türelement 43 eingesetzt. Anstelle des Türelements kann auch eine als Blende ausgebildete Türzarge an den Lagerabschnitten 21 befestigt werden.

Damit ist der Elektroschrank fertiggestellt.

Der in Fig. 6 dargestellte Elektroschrank ist als Verteilerkasten für den Wandeinbau vorgesehen.

## Patentansprüche

1. Elektroschrank (34) mit einer Rückwand (4), mit wenigstens einer mit der Rückwand (4) klemmend in Eingriff gebrachten Eckenstrebe (1), und mit wenigstens einem Seitenteil (26, 27), das mit der Rückwand (4) und der Eckstrebe (1) klemmend in Eingriff gebracht ist.

2. Elektroschrank nach Anspruch 1, wobei die Rückwand (4) an wenigstens einer Längskante einen Kantenfalz (23a, 23b) ausbildet, der mit einem entsprechend ausgestalteten Klemmabschnitt (5a, 5b) der Eckenstrebe (1) verklemmt ist.

3. Elektroschrank nach Anspruch 2, wobei in einem Eckenbereich der Rückwand (4) zwei im wesentlichen parallel zu den Längskanten der Rückwand (4) verlaufende Kantenfalze (23a, 23b) vorgesehen sind, die wenigstens zwei entsprechenden Klemmabschnitten (5a, 5b) der Eckenstrebe (1) zugeordnet sind.

4. Elektroschrank nach Anspruch 3, wobei die Kantenfalze (23a, 23b) im Eckenbereich der Rückwand unterbrochen sind und eine Eckenaussparung (24) bilden, in welche die Eckenstrebe (1) eingesetzt ist.

5. Elektroschrank nach einem der oben genannten Ansprüche, wobei der Kantenfalz (23a, 23b) und der zugeordnete Klemmabschnitt (5a, 5b) ineinander geschoben sind.

6. Elektroschrank nach Anspruch 5, wobei der Kantenfalz (23a, 23b) und der Klemmabschnitt (5a, 5b) als zwei ineinandergeschobene U-Profile ausgebildet sind.

7. Elektroschrank nach einem der oben genannten Ansprüche, wobei die Eckenstrebe (1) in einem Querschnitt im wesentlichen parallel zur Ebene der Rückwand (4) zwei im wesentlichen senkrecht aufeinander stehende Schenkel (3a, 3b) aufweist, welche die äußeren Seitenkantenabschnitte (37) des Elektroschranks (34) bilden.

8. Elektroschrank nach Anspruch 7, wobei auf der dem Innenraum des Elektroschranks (34) zugewandten Seite der Eckenstrebe (1) zwischen den Schenkeln (3a, 3b) eine Versteifungsrippe (3c) angeordnet ist.

9. Elektroschrank nach einem der oben genannten Ansprüche, wobei an einem von der Rückwand (4) abgewandten, vorderen Ende an der Eckenstrebe (1) wenigstens eine Anschlagfläche (12, 13, 14, 15, 16, 17) ausgebildet ist, an der ein vorderer Bereich (28, 29) des Seitenteils (26, 27) anliegt.

10. Elektroschrank nach Anspruch 9, wobei die wenigstens eine Anschlagfläche (12, 13, 14, 15, 16, 17) an wenigstens einem Endfalz (11a, 11b) vorgesehen ist, der am vorderen Ende eines Schenkels (3a, 3b) der Eckenstrebe ausgebildet ist.

11. Elektroschrank nach Anspruch 9 oder 10, wobei der vordere Bereich (28) des Seitenteils (26, 27) als ein Falz ausgebildet ist, der im wesentlichen parallel zu einer Kante des Seitenteils (26, 27) verläuft.

12. Elektroschrank nach einem der Ansprüche 9 bis 11, wobei der vordere Bereich (28) des Seitenteils (26, 27) das vordere Ende (11a, 11 b) der Eckenstrebe (1) zumindest abschnittsweise umgreift.

13. Elektroschrank nach einem der oben genannten Ansprüche, wobei das Seitenteil einen hinteren Falz (33) aufweist, der mit dem dem jeweiligen Seitenteil (26, 27) zugeordneten Kantenfalz (23a, 23b) im Eingriff steht.

14. Elektroschrank nach Anspruch 13, wobei sich im Eckenbereich der Rückwand (4) der Klemmabschnitt (5a, 5b) der Eckenstrebe (1), der Kantenfalz (23) der Rückwand (4) und der hintere Falz (33) überlagern.

15. Elektroschrank nach Anspruch 14, wobei der Klemmabschnitt (5, 5b), der Kantenfalz (23) und der hintere Falz (33) im wesentlichen drei miteinander verschachtelte U-Profile ausbilden.

16. Elektroschrank nach einem der oben genannten Ansprüche, wobei an der Eckenstrebe (1) wenigstens ein Rastmittel (5'a, 5'b, 5'c) ausgebildet ist, das mit einem entsprechend ausgestaltetem Gegenrastmittel (25a, 25b, 25c) der Rückwand (4) verrastet ist.

17. Elektroschrank nach Anspruch 16, wobei das Rastmittel (5'a, 5'b) am Klemmabschnitt (5a, 5b) und das Gegenrastmittel im Bereich des Kantenfalzes (23a, 23b) ausgebildet ist.

18. Elektroschrank nach Anspruch 16 oder 17, wobei das Rastmittel (5'c) an dem der Rückwand zugeordneten Ende der Eckenstrebe (1) und das Gegenrastmittel (25c) im Bereich der Eckenaussparung angeordnet ist.

19. Elektroschrank nach einem der oben genannten Ansprüche, wobei an der Eckenstrebe (1) an zumindest einem Schenkel (3a, 3b) in der Nähe der Klemmabschnitte (5a, 5b) eine Aussparung (9a, 9b) ausgeformt ist, in die das diesem Schenkel (3a, 3b) zugeordnete Seitenteil (26, 27) eingesetzt ist.

20. Elektroschrank nach einem der oben genannten Ansprüche, wobei am vorderen, von der Rückwand (4) abgewandten Ende der Eckenstrebe (1) ein Lagerabschnitt (21) ausgebildet ist, in dem ein Türelement des Elektroschrankes (34) drehbar aufgenommen ist.

21. Elektroschrank nach einem der oben genannten Ansprüche, wobei die Seitenteile (26, 27) des Elektroschrankes (34) zusammen mit den vorderen Enden der Eckenstreben (1) eine dem Türelement (43) zugewandte, im wesentlichen rahmenförmige Türanschlagsfläche ausbilden, an der das Türelement (43) im geschlossenen Zustand anliegt.

22. Elektroschrank nach einem der oben genannten Ansprüche, wobei ein mit Elektrogeräten bestücktes Traggerüst (41) wenigstens ein Rastmittel (42) aufweist, das in wenigstens ein elektroschrankseitiges Gegenrastmittel eingreift und durch welches das Traggerüst (41) im Schrank gehalten ist.

23. Bausatz zur Herstellung eines Schaltschrankes (34) nach einem der oben genannten Ansprüche, umfassend wenigstens ein Seitenteil (26, 27), wenigstens eine Eckenstrebe (1) und die Rückwand (4).

24. Verfahren zum Zusammenbauen eines Elektroschrankes (34) umfassend folgende Verfahrensschritte:
- Festklemmen einer Eckenstrebe (1) an einer Rückwand (4) im Eckenbereich der Rückwand (4);
- Festklemmen eines hinteren Bereichs eines Seitenteils (26, 27) an der Rückwand (4) und eines vorderen Bereichs des Seitenteils (26, 27) im Bereich des vorderen Ende des Eckenstrebe (1).

25. Verfahren nach Anspruch 24, umfassend den weiteren Verfahrensschritt:
- Festklemmen der Eckenstrebe (1) an der Rückwand (4) durch Ineinanderschieben eines Klemmabschnittes (5a, 5b) der Eckenstrebe (1) und eines Kantenfalzes (23a, 23b) der Rückwand (4).

26. Verfahren nach Anspruch 24 oder 25, umfassen den weiteren Verfahrensschritt:
- Einsetzen einer Tür in einen Lagerabschnitt (21) der Eckenstrebe (1)

27. Verfahren nach einem der Ansprüche 24 bis 26, umfassend den weiteren Verfahrensschritt:
- Einsetzen eines fertig montierten und mit Elektrogeräten bestückten Tragegerüstes in den aufgebauten Elektroschrank.

28. Verfahren nach Anspruch 27, umfassend den weiteren Verfahrensschritt:
- Einclipsen des Tragegerüsts in den Schaltschrank.

## Claims

1. Electrical cabinet (34) with a rear wall (4), with at least one corner strut (1) engaged in a clamped manner with the rear wall (4), and with at least one lateral part (26, 27) engaged in a clamped manner with the rear wall (4) and the corner strut (1).

2. Electrical cabinet according to claim 1, wherein the rear wall (4) forms an edge bead (23a, 23b) on at least one longitudinal edge, said edge bead (23a, 23b) being clamped with a correspondingly embodied clamping section (5a, 5b) of the corner strut (1).

3. Electrical cabinet according to claim 2, wherein two edge beads (23a, 23b) running essentially parallel to the longitudinal edges of the rear wall (4) are provided in a corner region of the rear wall (4) and are assigned to at least two corresponding clamping sections (5a, 5b) of the corner strut (1).

4. Electrical cabinet according to claim 3, wherein the edge beads (23a, 23b) are interrupted in the corner region of the rear wall and form a corner recess (24), into which the corner strut (1) is inserted.

5. Electrical cabinet according to one of the preceding claims, wherein the edge bead (23a, 23b) and the assigned clamping section (5a, 5b) are pushed into each other.

6. Electrical cabinet according to claim 5, wherein the edge bead (23a, 23b) and the clamping section (5a, 5b) are configured as two U-profiles pushed into each other.

7. Electrical cabinet according to one of the preceding claims, wherein the corner strut (1), in a cross section essentially parallel to the plane of the rear wall (4), has two essentially perpendicular limbs (3a, 3b), which form the outer lateral edge sections (37) of the electrical cabinet (34).

8. Electrical cabinet according to claim 7, wherein a stiffening rib (3c) is disposed on the side of the corner strut (1) facing the interior of the electrical cabinet (34) between the limbs (3a, 3b).

9. Electrical cabinet according to one of the preceding claims, wherein at least one stop surface (12, 13, 14, 15, 16, 17) is configured on a front end of the corner strut (1) facing away from the rear wall (4), with which stop surface (12, 13, 14, 15, 16, 17) a front region (28, 29) of the lateral part (26, 27) is in contact.

10. Electrical cabinet according to claim 9, wherein the at least one stop surface (12, 13, 14, 15, 16, 17) is provided on at least one end bead (11a, 11b), configured at the front end of a limb (3a, 3b) of the corner strut.

11. Electrical cabinet according to claim 9 or 10, wherein the front region (28) of the lateral part (26, 27) is configured as a bead, running essentially parallel to an edge of the lateral part (26, 27).

12. Electrical cabinet according to one of claims 9 to 11, wherein the front region (28) of the lateral part (26, 27) encompasses the front end (11a, 11b) of the corner strut (1) at least in sections.

13. Electrical cabinet according to one of the preceding claims, wherein the lateral part has a rear bead (33), which is engaged with the edge bead (23a, 23b) assigned to the respective lateral part (26, 27).

14. Electrical cabinet according to claim 13, wherein the clamping section (5a, 5b) of the corner strut (1), the edge bead (23) of the rear wall (4) and the rear bead (33) overlay each other in the corner region of the rear wall (4).

15. Electrical cabinet according to claim 14, wherein the clamping section (5a, 5b), the edge bead (23) and the rear bead (33) essentially form three interleaved U-profiles.

16. Electrical cabinet according to one of the preceding claims, wherein at least one latching means (5'a, 5'b, 5'c) is configured on the corner strut (1), being latched to a correspondingly embodied counter-latching means (25a, 25b, 25c) of the rear wall (4).

17. Electrical cabinet according to claim 16, wherein the latching means (5'a, 5'b) is configured on the clamping section (5a, 5b) and the counter-latching means is configured in the region of the edge bead (23a, 23b).

18. Electrical cabinet according to claim 16 or 17, wherein the latching means (5'c) is disposed on the end of the corner strut (1) facing the rear wall and the counter-latching means (25c) is disposed in the region of the corner recess.

19. Electrical cabinet according to one of the preceding claims, wherein a recess (9a, 9b) is formed on the corner strut (1) on at least one limb (3a, 3b) in proximity to the clamping sections (5a, 5b), into which recess (9a, 9b) the lateral part (26, 27) assigned to the limb (3a, 3b) is inserted.

20. Electrical cabinet according to one of the preceding claims, wherein a bearing section (21) is configured on the front end of the corner strut (4) facing away from the rear wall (4), in which bearing section (21) a door element of the electrical cabinet (34) is held in a rotatable manner.

21. Electrical cabinet according to one of the preceding claims, wherein the lateral parts (26, 27) of the electrical cabinet (34) together with the front ends of the corner struts (1) form an essentially frame-shaped door stop surface facing the door element (43), with which door stop surface the door element (43) is in contact when closed.

22. Electrical cabinet according to one of the preceding claims, wherein a support structure (41) fitted with electrical devices has at least one latching means (42), which engages in at least one counter-latching means on the electrical cabinet side and by means of which the support structure (41) is held in the cabinet.

23. Assembly kit for producing an electrical cabinet (34) according to one of the preceding claims, comprising at least one lateral part (26, 27), at least one corner strut (1) and the rear wall (4).

24. Method for assembling an electrical cabinet (34) comprising the following method steps:
- Clamping a corner strut (1) to a rear wall (4) in the corner region of the rear wall (4);
- Clamping a rear region of a lateral part (26, 27) to the rear wall (4) and a front region of the lateral part (26, 27) in the region of the front end of the corner strut (1).

25. Method according to claim 24, comprising the further method step:
- Clamping the corner strut (1) to the rear wall (4) by pushing a clamping section (5a, 5b) of the corner strut (1) and an edge bead (23a, 23b) of the rear wall (4) into each other.

26. Method according to claim 24 or 25, comprising the further method step:
- Inserting a door into a bearing section (21) of the corner strut (1).

27. Method according to one of claims 24 to 26, comprising the further method step:
- Inserting a support structure that is already mounted and fitted with electrical devices into the assembled electrical cabinet.

28. Method according to claim 27, comprising the further method step:
- Clipping the support structure into the electrical cabinet.

## Revendications

1. Armoire électrique (34) dotée d'une paroi arrière (4), d'au moins une traverse de coin (1) amenée à s'engager de manière serrée sur la paroi arrière (4) et d'au moins une pièce latérale (26, 27) qui est amenée à s'engager de manière serrée sur la paroi arrière (4) et la traverse de coin (1).

2. Armoire électrique selon la revendication 1, dans laquelle la paroi arrière (4) forme sur au moins un bord longitudinal un repli de bord (23a, 23b) qui est serré sur une partie de serrage (5a, 5b) de configuration correspondante de la traverse de coin (1).

3. Armoire électrique selon la revendication 2, dans laquelle, deux replis de bord (23a, 23b) qui s'étendent essentiellement en parallèle aux côtés longitudinaux de la paroi arrière (4) sont prévus dans une partie de coin de la paroi arrière (4) et sont associés à au moins deux parties de serrage (5a, 5b) correspondantes de la traverse de coin (1).

4. Armoire électrique selon la revendication 3, dans laquelle les replis de bord (23a, 23b) sont interrompus dans la zone du coin de la paroi arrière et forment un dégagement de coin (24) dans lequel la traverse de coin (1) est insérée.

5. Armoire électrique selon l'une des revendications précédentes, dans laquelle le repli de bord (23a, 23b) et la partie de serrage (5a, 5b) associée sont glissés l'un dans l'autre.

6. Armoire électrique selon la revendication 5, dans laquelle le repli de bord (23a, 23b) et la partie de serrage (5a, 5b) sont configurés sous la forme de deux profilés en U glissés l'un dans l'autre.

7. Armoire électrique selon l'une des revendications précédentes, dans laquelle la traverse de coin (1) présente en coupe transversale essentiellement parallèle au plan de la paroi arrière (4) deux ailes (3a, 3b) situées essentiellement à la perpendiculaire l'une de l'autre et qui forment les parties extérieures (37) des arrêtes latérales de l'armoire électrique (34).

8. Armoire électrique selon la revendication 7, dans laquelle une nervure de renfort (3c) est disposée entre les ailes (3a, 3b) sur le côté de la traverse de coin (1) tourné vers l'espace intérieur de l'armoire électrique (34).

9. Armoire électrique selon l'une des revendications précédentes, dans laquelle au moins une surface de butée (12, 13, 14, 15, 16, 17) sur laquelle une partie avant (28, 29) de la pièce latérale (26, 27) repose est formée sur l'extrémité avant, détournée de la paroi arrière (4), de la traverse de coin (1).

10. Armoire électrique selon la revendication 9, dans laquelle l'au moins une surface de butée (12, 13, 14, 15, 16, 17) est prévue sur au moins un repli d'extrémité (11a, 11b) qui est formé à l'extrémité avant d'une aile (3a, 3b) de la traverse de coin.

11. Armoire électrique selon la revendication 9 ou 10, dans laquelle la partie avant (28) de la pièce latérale (26, 27) est configurée comme repli qui s'étend essentiellement en parallèle à un bord de la pièce latérale (26, 27).

12. Armoire électrique selon l'une des revendications 9 à 11, dans laquelle la partie avant (28) de la pièce latérale (26, 27) chevauche au moins en partie l'extrémité avant (11a, 11b) de la traverse de coin (1).

13. Armoire électrique selon l'une des revendications précédentes, dans laquelle la pièce latérale présente un repli arrière (33) engagé sur le repli de bord (23a, 23b) associé à la pièce latérale (26, 27) correspondante.

14. Armoire électrique selon la revendication 13, dans laquelle la partie de serrage (5a, 5b) de la traverse de coin (1), le repli de bord (23) de la paroi arrière (4) et le repli arrière (33) se superposent dans la zone du coin de la paroi arrière (4).

15. Armoire électrique selon la revendication 14, dans laquelle la partie de serrage (5a, 5b), le repli de bord (23) et le repli arrière (33) forment essentiellement trois profilés en U emboîtés les uns dans les autres.

16. Armoire électrique selon l'une des revendications précédentes, dans laquelle au moins un moyen d'encliquetage (5'a, 5'b, 5'c) encliqueté sur un moyen complémentaire d'encliquetage (25a, 25b, 25c) de configuration correspondante de la paroi arrière (4) est formé sur la traverse de coin (1).

17. Armoire électrique selon la revendication 16, dans laquelle le moyen d'encliquetage (5'a, 5'b) est formé sur la partie de serrage (5a, 5b) et le moyen complémentaire d'encliquetage est formé dans la zone du repli de bord (23a, 23b).

18. Armoire électrique selon la revendication 16 ou 17, dans laquelle le moyen d'encliquetage (5'c) est disposé à l'extrémité de la traverse de coin (1) associée à la paroi arrière et le moyen complémentaire d'encliquetage (25c) est disposé dans la zone du dégagement de coin.

19. Armoire électrique selon l'une des revendications précédentes, dans laquelle au moins un dégagement (9a, 9b) est formé sur au moins une aile (3a, 3b) de la traverse de coin (1) à proximité des parties de serrage (5a, 5b) dans lequel la pièce latérale (26, 27) associée à l'aile (3a, 3b) respective est insérée.

20. Armoire électrique selon l'une des revendications précédentes, dans laquelle une partie d'appui (21) dans laquelle un élément de porte de l'armoire électrique (34) est logé de manière rotative est formée à l'extrémité avant, détournée de la paroi arrière (4), de la traverse de coin (1).

21. Armoire électrique selon l'une des revendications précédentes, dans laquelle les pièces latérales (26, 27) de l'armoire électrique (34) forment avec les extrémités avant des traverses de coin (1) une surface de butée de porte essentiellement en forme d'encadrement et tournée vers l'élément de porte (43) et contre laquelle l'élément de porte (43) repose lorsqu'il est en position fermée.

22. Armoire électrique selon l'une des revendications précédentes, dans laquelle un bâti de support (41) équipé d'appareils électriques présente au moins un moyen d'encliquetage (42) qui s'engage dans au moins un moyen complémentaire d'encliquetage situé sur l'armoire électrique et par lequel le bâti de support (41) est maintenu dans l'armoire.

23. Module de fabrication d'une armoire de commande (34) selon l'une des revendications précédentes, qui comprend au moins une pièce latérale (26, 27), au moins une traverse de coin (1) et la paroi arrière (4).

24. Procédé d'assemblage d'une armoire électrique (34), lequel procédé comprend les étapes suivantes :
- serrage d'une traverse de coin (1) sur une paroi arrière (4) dans la zone du coin de la paroi arrière (4),
- serrage d'une partie arrière d'une pièce latérale (26, 27) sur la paroi arrière (4) et d'une partie avant de la pièce latérale (26, 27) dans la zone de l'extrémité avant de la traverse de coin (1).

25. Procédé selon la revendication 24, qui comprend l'étape supplémentaire de :
- serrer la traverse de coin (1) sur la paroi arrière (4) par engagement l'une dans l'autre d'une partie de serrage (5a, 5b) de la traverse de coin (1) et d'un repli de bord (23a, 23b) de la paroi arrière (4).

26. Procédé selon la revendication 24 ou 25, qui comprend l'étape supplémentaire de :
- insérer une porte dans une partie d'appui (21) de la traverse de coin (1).

27. Procédé selon l'une des revendications 24 à 26, qui comprend l'étape supplémentaire de :
- insérer dans l'armoire électrique assemblée un bâti de support assemblé et équipé d'appareils électriques.

28. Procédé selon la revendication 27, qui comprend l'étape supplémentaire de :
- encliqueter le bâti de support dans l'armoire de commande.
